# EUROPÄISCHE PATENTANMELDUNG

(11) **EP 4 016 769 A1**
(43) Veröffentlichungstag der Anmeldung: **22.06.2022**
(21) Anmeldenummer: 22151053.0
(22) Anmeldetag: 15.11.2016
(51) Int. Cl.: H02G 1/12

(54) **VORRICHTUNG UND VERFAHREN ZUM ENTFERNEN EINER UMHÜLLUNG ELEKTRISCHER LEITER**

(62) Teilanmeldung aus: 16199001.5
(71) Anmelder: Schleuniger AG, 3608 Thun (CH)
(72) Erfinder: MESSINA, Carmelo, 6343 Rotkreuz (CH); Imholz, Klemens, 6300 Zug (CH); Furrer, Jörg, 6048 Horw (CH); Widmer, Roman, 8903 Birmensdorf (CH)
(74) Vertreter: Patentbüro Paul Rosenich AG

(57) **Zusammenfassung**

Eine Vorrichtung zum Entfernen einer Umhüllung elektrischer Leiter eines vorzugsweise mehradrigen Kabels (K) umfasst zumindest eine Halteanordnung/Klemmvorrichtung zum Klemmen des Kabels (K) und einer vorzugsweise um die Kabellängsachse drehbaren Messeranordnung (1) für die Umhüllung. Eine Abzugseinrichtung (A) für die zumindest teilweise eingeschnittene Umhüllung ist in die Vorrichtung integriert. Diese Abzugseinrichtung (A) umfasst Abzugsmittel (5), die zur kraftschlüssigen Verbindung mit der Umhüllung und zur Ausübung einer Kraft auf die Umhüllung parallel zur Kabelachse ausgelegt sind. Weiter betrifft die Erfindung ein Verfahren zum Entfernen einer inneren Umhüllung elektrischer Leiter eines mehradrigen Kabels (K).

## Beschreibung

Die Erfindung betrifft eine Vorrichtung zum Entfernen einer Umhüllung elektrischer Leiter eines vorzugsweise mehradrigen Kabels, vorzugsweise einer zwischen einem Schirm oder einer Isolierung und den inneren Leitern befindlichen Folie, umfassend zumindest eine Halteanordnung/Klemmvorrichtung zum Klemmen des Kabels und einer vorzugsweise um die Kabellängsachse drehbaren Messeranordnung für die Umhüllung, gemäss dem Oberbegriff des Anspruchs 1, sowie ein Verfahren zum Entfernen einer inneren Umhüllung elektrischer Leiter eines mehradrigen Kabels, vorzugsweise einer zwischen einem Schirm oder einer Isolierung und den inneren Leitern befindlichen Folie, umfassend das Klemmen des Kabels und das Einschneiden der inneren Umhüllung, gemäss dem Oberbegriff des Anspruchs 11.

Die Litzen von Kabeln, insbesondere bei Kabeln mit mehreren Litzen, sind manchmal mit einer Folie umwickelt. Diese muss für die Bearbeitung der Litzen entfernt werden, was sehr schwierig sein kann, wozu der Wickelwinkel, die Dicke der Folie, das Folienmaterial, die Überlappung, etc. beitragen. Im Querschnitt gesehen stellt sich die Form der Folie nicht rund dar, da sie sich zumindest teilweise an die darunterliegenden Litzen anschmiegt und derart bei einem Beispiel mit vier Litzen im Querschnitt gesehen einen Umriss etwa in Kleeblattform annimmt. Selbstverständlich sind auch Kabel mit mehr oder weniger Litzen möglich.

Herkömmliche Lösungen sehen beispielsweise einen "Blas-Bürst-Mechanismus" vor, wie er beispielsweise in der EP 2871734 A1 offenbart ist. Dabei ist eine buchsenförmige Aufnahme für das zu bearbeitende Ende des Kabels vorgesehen, ebenso wie ein axial in Bezug auf die Achse der zentralen Öffnung relativ zur Aufnahme bewegbarer Arbeitskopf, welcher zumindest eine zentrale, auf das Ende des Kabels ausgerichtete Druckluftdüse aufweist. Damit kann in sehr schonender Weise rasch die Folienumhüllung der inneren Leiter geöffnet werden, in dem sie durch den Druckluftstoss oder Druckluftstrom zum Aufplatzen oder zumindest zum Aufblähen gebracht wird. Mittels eines rotierenden Schneid- oder Fräskopfes, in dessen rotierender Achse vorzugsweise die Druckluftdüse und die zu dieser Druckluftdüse führende Druckluftzuleitung ausgearbeitet sind, kann die abgehobene Folie dann endgültig entfernt werden. Der Bearbeitungskopf kann auch mit einer axial ausgerichteten Ringschneide versehen sein, deren Umfang jenem der inneren Leiter entspricht.

In der CH 710236 A2 ist eine Ummantelungsschneidvorrichtung mit einem rotierenden Messer für einen Aussenisolator eines Kabels offenbart. Damit wird ein Einschnitt in einer Ummantelung einer elektrischen Leitung mit Isolationsummantelung vorgenommen, zu welchem Zweck ein Scheibenschneider, eine Hebeeinheit, die den Scheibenschneider in vertikaler Richtung anhebt und absenkt, und eine Querverlagerungseinheit, die den Scheibenschneider in Links-rechts-Richtung vor- und zurückfährt vorhanden. Der Scheibenschneider wird während des Einschneidens in die Ummantelung der elektrischen Leitung von der Hebeeinheit und der Querverlagerungseinheit verlagert, derart, dass er den Umfang der elektrischen Leitung umläuft, wobei unter Verlagerung eines Kontaktpunkts des Scheibenschneiders an der Ummantelung ein Einschnitt hergestellt wird.

Vielfach wurde auch schon vorgeschlagen, dass Folien mittels Laser abisoliert werden können, wie beispielsweise in der KR 101610306 B1 offenbart.

Wie immer auch der zu entfernende Abschnitt der Umhüllung eingeschnitten, perforiert oder sonst vom verbleibenden Abschnitt getrennt wird, muss der zu entfernende Abschnitt vom Kabel getrennt werden. Das Abziehen dieser Teile bedarf eines relativ hohen Krafteinsatzes, wobei die Kraft schwierig auf die Folien zu übertragen ist. Nur mittels Reibung können die Umhüllungsabschnitte nicht abgezogen werden, denn die Reibung zwischen dem Abzug und der Umhüllung ist in etwa gleich der Reibung zwischen Umhüllung und den darunterliegenden elektrischen Leitern oder anderen Kabelelementen.

Es war daher die Aufgabe der vorliegenden Erfindung eine Vorrichtung bzw. ein Verfahren wie eingangs angegeben so weiterzuentwickeln, dass alle abgetrennten Abschnitte einer Umhüllung automatisiert und sicher sowie möglichst vollständig vom Kabel entfernt werden können.

Zur Lösung dieser Aufgabe ist die eingangs beschriebene Vorrichtung dadurch gekennzeichnet, dass eine Abzugseinrichtung für die zumindest teilweise eingeschnittene Umhüllung in die Vorrichtung integriert ist und diese Abzugseinrichtung Abzugsmittel umfasst, die zur kraftschlüssigen Verbindung mit der Umhüllung und zur Ausübung einer Kraft auf die Umhüllung parallel zur Kabelachse ausgelegt sind. Durch die kraftschlüssige Verbindung zwischen Abzugsmittel und geschnittenem Abschnitt der Umhüllung können weitere Kräfte vermieden werden, die ein Abziehen erschweren oder diesem entgegenwirken würden.

Bevorzugt ist dabei vorgesehen, dass die Abzugseinrichtung zumindest eine Applikationsanordnung für jeweils zumindest ein Klebeband, zumindest ein Klebeband als Abzugsmittel, sowie Mittel zum Abziehen des zumindest einen Klebebandes mit anhaftender Umhüllung in der Längsrichtung des Kabels umfasst. Das Abziehen der eingeschnittenen Folien wird braucht relativ viel Kraft. Diese Kraft kann jedoch gut über ein Klebeband direkt auf die Folie übertragen werden. Diese erlaubt es, auch fest sitzende Umhüllungen von den darunter liegenden Teilen, wie beispielsweise Litzen, vom Kabel abzuziehen. Nach einem ersten Andrücken des Klebebandes an die geschnittenen Abschnitte der Umhüllung muss keine weitere Reibungskraft aufrechterhalten werden, die das Abziehen behindern würde. Die Klebekraft hingegen wird zum Abziehen der Umhüllung genutzt. Ein weiterer Vorteil für die Verwendung von Klebeband ist es, dass die abgezogenen Teile der Umhüllung auf dem Klebeband fixiert verbleiben, welches kontinuierlich aufgewickelt wird. Es müssen also keine Umhüllungsteile durch separate Vorrichtungen aufgesaugt oder auf andere Weise entfernt werden.

Eine weitere vorteilhafte Ausführungsform der Erfindung ist dadurch gekennzeichnet, dass die Applikationsanordnung zumindest eine automatisch radial in Bezug auf das Kabel hin und vom Kabel weg bewegbare sowie in Längsrichtung des Kabels bewegbare Führungsbacke für das Klebeband umfasst. Über eine derartige Führungsbacke kann in einfacher Weise sowohl die gesicherte und punktgenaue Zuführung des Klebebandes bzw. entsprechender Abzugsmittel bewirkt werden.

Dabei ist eine optionale Ausführungsform der Vorrichtung erfindungsgemäss dadurch gekennzeichnet, dass diese Führungsbacke ein starrer Körper ist und an ihrem am Kabel zur Anlage kommenden Abschnitt mit einer elastischen Schicht versehen ist. Bevorzugt ist die Führungsbacke aus Metall gefertigt, was für lange Lebensdauer und optimale Übertragung der Andruckkräfte des Klebebandes sorgt. Die elastische Einlage hingegen sorgt im Kontaktbereich der Führungsbacke mit dem Kabel für einen guten Formschluss, um das Klebeband möglichst grossflächig anzudrücken und dabei das Kabel schonend zu umfassen.

Um das Zuführen des Klebebandes oder eines ähnlichen Abzugsmittels zu erleichtern, besteht gemäss einem weiteren optionalen Erfindungsmerkmal die Stirnseite der Führungsbacke aus einem Material mit niedrigem Reibungskoeffizienten. In baulich einfacher Weise ist dazu bevorzugt das Material der Führungsbacke auf die Stirnseite der Führungsbacke vorgezogen. Um dabei die Anpassung der Führungsbacke an den Kabelumfang nicht zu behindern, kann gegebenenfalls im vorgezogenen Material der Führungsbacke an der Stirnseite ein kleiner Ausschnitt im Bereich des Kabels ausgearbeitet sein.

Eine vorteilhafte Ausführungsform der Erfindung sieht vor, dass die Mittel zum Abziehen des Klebebands mit anhaftender Umhüllung in der Längsrichtung des Kabels durch die Zuführ- oder Speichereinrichtung für das Klebeband gebildet sind, welche zumindest zeitweise arretierbar oder dauerhaft nur in Zufuhrrichtung freigegeben ist, sowie durch einen entlang des Kabels bewegbaren Schlitten, auf welchem die Zuführ- oder Speichereinrichtung angebracht ist. Dies ermöglicht es, einfach und auch gut automatisierbar das Abziehen des Abzugsmittels mit der darauf fixierten Umhüllung durch eine Bewegung der Zuführ- oder Speichereinrichtung für das Klebeband entlang der Kabelachse zu bewerkstelligen.

Bevorzugt ist eine erfindungsgemässe Vorrichtung dadurch gekennzeichnet, dass die Applikationsanordnung für das Abzugsmittel zwei Anordnungen mit Führungsbacke und Zuführ- oder Speichereinrichtung für das Klebeband, vorzugsweise in Form von Klebebandrollen, auf einander gegenüberliegenden Seiten des Kabels aufweist, welche Applikationsanordnungen für eine Relativbewegung in Bezug auf das Kabel in Kabellängsrichtung auf einem entlang der Kabellängsachse vor und zurück verschiebbaren Schlitten montiert ist. Das Abziehen der eingeschnittenen Umhüllung erfordert relativ viel Kraft, welche schwierig auf die abgeschnittenen oder abgetrennten Abschnitte der Umhüllung zu übertragen ist. Durch die Verwendung von zwei Klebebändern auf einander gegenüberliegenden Seiten des Kabels wird das Kabel komplett umschlossen und werden alle Umhüllungsabschnitte vollständig umschlossen und wird die Kraft für das Abziehen auf möglichst grosser Fläche übertragen.

Eine vorteilhafte erfindungsgemässe Ausführungsform sieht weiters optional vor, dass die Applikationsanordnung einen Sensor für Markierungen auf dem Klebeband aufweist, der mit einer Auswerteeinheit für die Sensorsignale verbunden ist. Durch eine derartige Überwachung mit je nach Typ unterschiedlichen Codierungen kann geprüft werden, ob der richtige Klebebandtyp eingesetzt ist. Auch eine Prüfung des korrekten Bandtransportes ist damit möglich, sowie die Erkennung des Bandendes.

Eine bevorzugte Weiterbildung der erfindungsgemässen Vorrichtung gemäss einem der vorhergehenden Absätze ist dadurch gekennzeichnet, dass zusätzlich eine Umhüllungs-Abschabanordnung in die Vorrichtung integriert ist. Sollten also nach dem Abziehen der Umhüllung noch Reste der Umhüllung auf dem Kabel verblieben sein, können diese Reste in Richtung vom freigelegten Kabelende weg zurückgestossen werden. Für die einfache Zuführung des Kabels und die einfache Einhaltung des prozessgemässen Bearbeitungsablaufes ist es vorteilhaft, wenn dabei die Umhüllungs-Abschabanordnung vorzugsweise in Kabelvorschubrichtung vor der Messeranordnung und vorzugsweise die Abzugseinrichtung in Kabelvorschubrichtung hinter der Messeranordnung positioniert sind. Wenngleich auch die Abschabanordnung hier in Verbindung mit der erfindungsgemässen Messeranordnung beschrieben ist, ist offensichtlich, dass die Abschabanordnung prinzipiell mit jeder beliebigen Schneidanordnung oder Abtrennanordnung für die zu entfernende Umhüllung kombinierbar ist. So kann auch bei Schneidanordnungen auf Basis von Schneide-Lasern ein Zurückstossen verbliebener Reste der Umhüllung vorteilhaft sein, ebenso wie bei Trennanordnungen mit Perforierung der Umhüllung und anschliessendem Abreissen und Abziehen des Endstücks der Umhüllung.

Eine vorteilhafte Ausführungsform dieser Vorrichtung weist eine Abschabanordnung mit einem Schaberkopf mit zumindest zwei, vorzugsweise vier, zentrisch um die inneren Leiter des Kabels schliessbare Form backen auf. Diese Form backen bilden in geschlossener, d.h. maximal angenäherter Stellung zusammen eine vorzugsweise runde Durchgangsöffnung für die Anordnung der inneren Leiter des Kabels, wobei diese auf den Radius von deren Hüllkreis einstellbar ist. Mit einem derartigen Schaberkopf mit ähnlich einer Fotoblende zusammenwirkenden Formbacken können verbleibende Reste der Umhüllung einfach und möglichst vollständig zurückgeschoben werden.

Gemäss einem weiteren optionalen Erfindungsmerkmal besteht jede Formbacke aus einem Tragkörper und einem darauf befestigten Schaber wobei jeder Tragkörper zumindest eine auf zumindest eine benachbarte Formbacke gerichtete Dichtung aufweist, derart dass zwischen Schabern, Tragkörpern, und Dichtungen eine zumindest fast luftdichte Kammer um das Kabel gebildet ist, welche mit zumindest einer Druckluftzufuhr verbunden ist. Der Begriff Schaber umfasst dabei jedes Element mit einer scharfen Kante, die eine Schabwirkung parallel zum Kabel ausüben kann, ohne jedoch das Kabel zu verletzen. Noch an den inneren Leitern, Litzen oder sonstigen Teilen des Kabels verbliebene Reste der Umhüllung können so durch einen oder mehrere Druckluftstösse von der Unterlage abgehoben und anschliessend durch die Schaber auf den Formbacken zurückgestossen werden.

Zur Lösung der eingangs gestellten Aufgabe ist auch ein Verfahren zum Entfernen einer inneren Umhüllung elektrischer Leiter eines mehradrigen Kabels vorgesehen, vorzugsweise einer zwischen einem Schirm oder einer Isolierung und den inneren Leitern befindlichen Folie. Ein derartiges Verfahren umfasst grundlegend das Klemmen des Kabels und das Einschneiden der inneren Umhüllung.

Erfindungsgemäss ist ein solches Verfahren dadurch gekennzeichnet, dass eine kraftschlüssige Verbindung mit einem Abzugsmittel hergestellt und die ein- oder abgeschnittene Umhüllung anschliessend in Längsrichtung des Kabels abgezogen wird.

Bevorzugt wird dabei zumindest ein Klebeband auf die ein- oder abgeschnittene Umhüllung angedrückt und anschliessend zusammen mit der ein- oder abgeschnittenen Umhüllung in Längsrichtung des Kabels abgezogen.

Eine weitere vorteilhafte Variante des erfindungsgemässen Verfahrens sieht vor, dass zwei Klebebänder von einander in Bezug auf die Kabelachse entgegengesetzte Seiten aufgebracht werden, wobei die Klebebänder vor dem Andrücken vorzugsweise trichterförmig bereitgehalten und erst anschliessend mittels Führungsbacken an die Umhüllung anliegend angedrückt werden. Vorzugsweise werden unmittelbar vor und während des Abziehens des Klebebandes die Führungsbacken wieder vom Kabel abgehoben, um durch dieses zumindest teilweise Öffnen die Reibung zwischen der abzuziehenden Umhüllung und dem Rest des Kabels zu vermindern, wodurch sich auch eine wesentliche Verminderung der für das Abziehen erforderlichen Kraft erzielen lässt.

Optional kann das Verfahren vorteilhaft derart gestaltet sein, dass eine Überwachung der Art des Klebebandes und/oder von dessen korrektem Abwickeln und/oder vom Erreichen des Endes des Klebebandes stattfindet.

Vorzugweise ist beim erfindungsgemässen Verfahren weiters dafür gesorgt, dass das Kabelende durch eine Umhüllungs-Abschabanordnung und danach durch die Messeranordnung hindurchgeschoben wird, und dass nach dem Schneiden und Abziehen der inneren Umhüllung das Kabel in die Umhüllungs-Abschabanordnung zurückgezogen und nach deren Aktivierung wieder nach vorn gestossen wird.

Um die noch am Kabel verbliebenen Reste der Umhüllung möglichst vollständig zurückstossen zu können, können diese etwas vom Kabel abgehoben werden, wenn eine Verfahrensvariante vorgesehen ist, gemäss der in der Umhüllungs-Abschabanordnung vor oder während des Vorstossens des Kabels in einen Schaberkopf in diesem Schaberkopf ein Überdruck aufgebaut und dadurch zumindest ein Druckluftstoss auf das Kabelende hin gerichtet wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erfindungsgemässe Vorrichtung in perspektivischer Darstellung,
- Fig. 2: die Vorrichtung der Fig. 1 in Seitenansicht,
- Fig. 3: eine Ausführungsform des Schaberkopfes einer UmhüllungsAbschabanordnung, mit geöffneten Formbacken,
- Fig. 4: den Schaberkopf der Fig.3, mit geöffneten Formbacken, von welchen die Schaber abgenommen sind,
- Fig. 5: eine einzelne Formbacke mit Dichtung und Schaber in Explosionsdarstellung,
- Fig. 6a: eine schematische Darstellung der Schaberanordnung in ganz geöffneter Stellung, und
- Fig. 6b: die Schaberanordnung der Fig. 6a in ganz geschlossener Stellung.

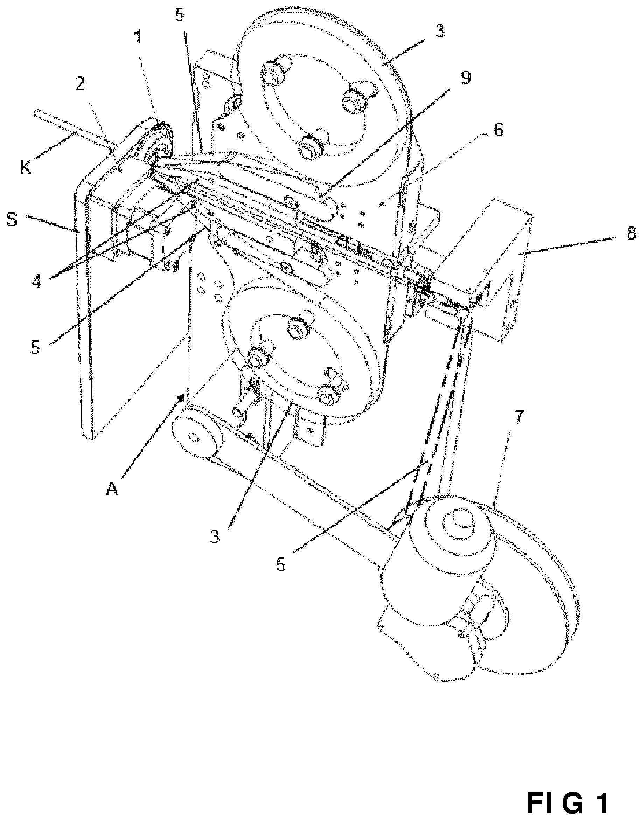

In Fig. 1 ist eine erfindungsgemässe Vorrichtung in ihrer Gesamtheit dargestellt. Sie umfasst in der dargestellten Version die Baugruppen Schneidvorrichtung S mit zumindest einer Halteanordnung bzw. Klemmvorrichtung zum axialen und rotativen Klemmen des Kabels K (nicht dargestellt), einem Messerrad 1 und dessen Antrieb 2 und einer vorzugsweise in Kabelvorschubrichtung hinter der Schneidvorrichtung S positionierten Abzugsvorrichtung A für die geschnittenen Abschnitte einer Umhüllung innenliegender Elemente des Kabels K. Weiters könnte noch eine Umhüllungs-Abschabanordnung (in Fig. 1 nicht dargestellt) in die Vorrichtung integriert sein, wobei deren vorteilhafte Positionierung in Kabelvorschubrichtung vor der Schneidvorrichtung S, insbesondere vor dem Messerrad 1, allenfalls auch seitlich davon in unmittelbarer Nähe vorgesehen ist, um möglichst kurze Wege für die Verbringung des zu bearbeitenden Kabelendes zu gewährleisten. Besonders vorteilhaft ist eine Anordnung, bei welcher das Kabel K zuerst durch eine vollkommen geöffnete Umhüllungs-Abschabanordnung und dann in eine unmittelbar dahinterliegende Schneidvorrichtung S geschoben ist. Nach dem Schneiden der Umhüllung und deren Abziehen muss das Kabel K dann zum Zurückstossen der verbliebenen Reste der Umhüllung nur durch die Schneidvorrichtung S bis zur Abschabanordnung zurückgezogen werden.

Die Abzugsvorrichtung A weist zwei Klebebandrollen 3 auf, sowie zwei Führungsbacken 4 für die Klebebänder 5 auf, welche gemeinsam auf einem parallel zur Längsrichtung des Kabels K verfahrbaren Schlitten 6 angeordnet sind. Der Schlitten 6 trägt weiters auch einen Aufroller 7 für das Klebeband 5 mit den darauf fixierten, abgezogenen Abschnitten der Umhüllung.

Das Messerrad 1 der Schneidvorrichtung S rotiert, angetrieben vom Antrieb 2, um das zentral hindurchgeführte Kabel K und schneidet mittels zumindest einer daran befestigten Klinge im Zuge der Drehbewegung die Umhüllung zumindest über Teile von deren Umfang und zumindest über einen Teil von deren Dicke ein.

Die geschnittenen Abschnitte der Folie werden mittels der Abzugseinrichtung A entfernt. Als Abzugsmittel dienen zwei einander in Bezug auf das Kabel K gegenüberliegende und einander mit den Klebeflächen zugewandten Klebebänder 5, welche von den Klebebandrollen 3 und die Führungs- und Andrückbacken 4 zum Kabel K gelangen. Zu Beginn des Abzugsvorganges sind die beiden Führungsbacken 4 zumindest an ihren vorderen Enden auseinandergefahren. Dadurch bilden die beiden Klebebänder 5 einen Trichter, welcher über das Kabelende bzw. die noch daran anhaftenden Abschnitte der Umhüllung geschoben wird. Entweder während oder nach dem Schneiden der Umhüllung werden die Führungsbacken 4 automatisch gesteuert radial auf das Kabel K hin bewegt, vorzugsweise geschwenkt, wodurch die Klebebänder 5 angedrückt werden. Die Führungsbacken 4 sind dabei vorzugsweise als starrer Körper ausgeführt, doch an ihrem am Kabel zur Anlage kommenden vorderen Abschnitt mit einer elastischen Schicht versehen. Eine Herstellung aus Metall mit einer elastischen Einlage in den mit dem Kabel in Kontakt kommenden Bereichen ist eine bevorzugte Ausführungsform. Dabei wird typischerweise auch die Stirnseite der Führungsbacke 4 aus einem Material mit niedrigem Reibungskoeffizienten, beispielsweise dem auf die Stirnseite der Führungsbacke 4 vorgezogenen Material der Führungsbacke 4 selbst, hergestellt sein. An der Vorderseite der Führungsbacke 4 kann ein kleiner Ausschnitt in jenem dem Kabel K am nächsten kommenden Bereich ausgearbeitet sein.

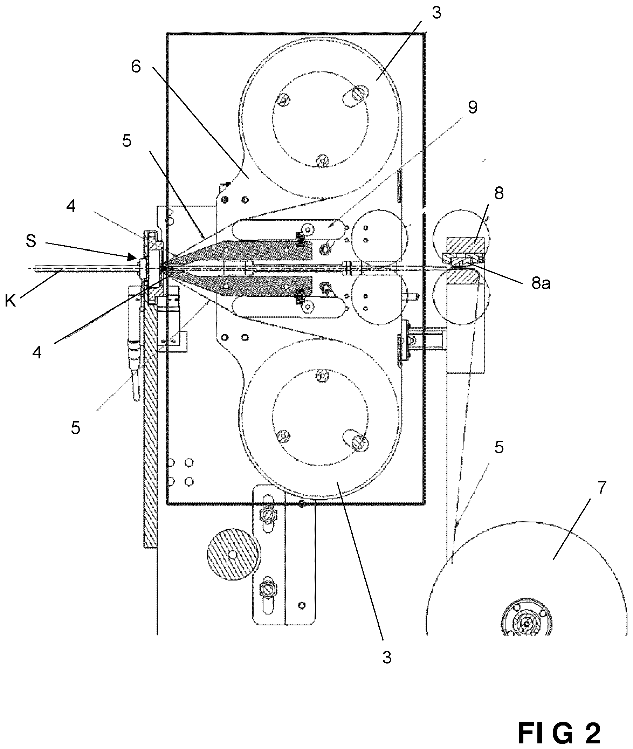

Nach dem Andrücken der Klebebänder 5 an die ab- oder eingeschnittene Umhüllung auf dem Kabel K mittels der vorzugsweise gummierte Bereiche der Führungsbacken 4 wird das Klebeband 5 zusammen mit den daran anhaftenden Abschnitten der Umhüllung in Längsrichtung des Kabels K zurückgezogen. Dazu wird das Abrollen des Klebebandes 5 von den Klebebandrollen 3 unterbunden, beispielsweise die Klebebandrollen 3 arretiert, und der Schlitten 6 wird zusammen mit den Klebebandrollen 3, den Führungsbacken 4 und dem Klebeband 5 vom Kabel K weg zurückgezogen und die geschnittenen Abschnitte der Umhüllung werden dabei von den darunter liegenden Elementen des Kabels K abgezogen, wobei diese Abschnitte zwischen den beiden Klebebändern 5 verbleiben. Das Klebeband 5 mit den Umhüllungsabschnitten wird dabei über eine Klemm- und Umlenkeinheit 8 zum Aufroller 7 geführt und dort zur anschliessenden Entsorgung aufgerollt. Wie in Fig. 2 zu erkennen ist, können Kontrollarme 9 bei jeder Führungsbacke 4 und jedem Klebeband 5 angeordnet sein, um deren Bewegungen bzw. Abrollen zu überwachen.

In der hinteren Stellung des Schlittens 6 wird das Klebeband 5 in der Klemm- und Umlenkeinheit 8 mittels beispielsweise eines Pneumatikzylinders 8a geklemmt, die wieder nach vorne fahrenden, wieder freigegebenen Klebebandrollen 3 werden um die Hublänge abgewickelt, die Führungsbacken 4 öffnen sich wieder. Damit kann der Ablauf für das Abziehen wieder von vorne beginnen.

In einer alternativen Ausführung wird das Klebeband 5 nicht mit einem Pneumatikzylinder 8a geklemmt, sondern zwischen vier Rollen 3 mit Freilauf geführt. Zwei Rollen 3 fahren auf dem Schlitten 6 mit, zwei andere Rollen sind fest montiert. Der Freilauf lässt nur ein Drehen der Rollen in eine Richtung zu. Durch das Vor- und Zurückfahren des Schlittens 6 werden die Klebebänder 5 weitergetaktet.

Für unterschiedliche Kabeltypen können dabei auch unterschiedliche Typen von Klebebändern 5 zum Einsatz kommen. Auch ist es wichtig, das korrekte Abrollen der Klebebänder bzw. den für das Abziehen der geschnittenen Umhüllung ausreichenden Abzugsweg zu überwachen. Zu diesem Zweck werden vorteilhafterweise Klebebänder mit Markierungen wie etwa Balkencodes auf der nicht klebenden Rückseite verwendet. Diese Markierungen können über einen entsprechenden Sensor der Applikationsanordnung, beispielsweise einen Kontrast-Sensor im Fall von Balkencodes, erkannt und in einer Auswerteeinheit verarbeitet werden. Je nach Abzugslänge muss eine entsprechende Anzahl Balken von der Steuerung erkannt werden. Verschiede Klebebandtypen können zur Unterscheidung unterschiedliche Balkenmuster aufgedruckt haben (Prinzip Barcode). Die Sensor-Überwachung des Klebebandes, die beispielweise auch über Kameras erfolgen könnte, ermöglicht auch die Erkennung, wann das Bandende erreicht ist und eine neue Klebebandrolle 3 eingesetzt werden muss.

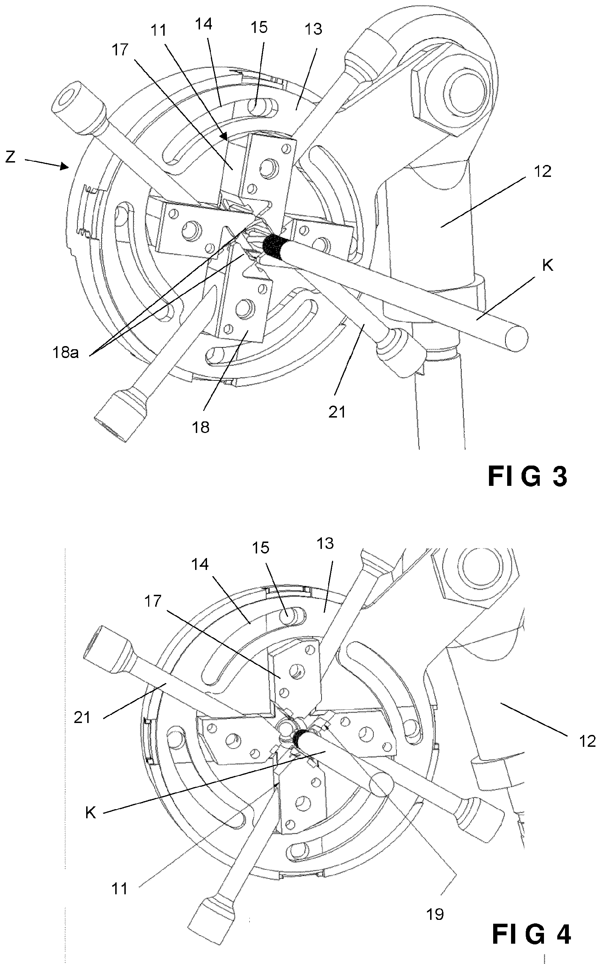

Für manche Kabeltypen ist trotz optimaler Ausführung der Schneidevorrichtung S und der Abzugseinrichtung A keine komplette Entfernung der Umhüllung möglich, so dass noch zwischen jeweils zwei benachbarten Litzen des Kabels ein kleines Dreieck der Folie zurückbleibt. Diese kann dann mittels einer weiteren Einrichtung, einer Umhüllungs-Abschabanordnung in einem weiteren Arbeitsschritt zurückgeschoben werden. Diese in Kabelvorschubrichtung vorzugsweise ummittelbar vor der Schneidevorrichtung S angeordnete Abschabanordnung beinhaltet einen zentrisch um das Kabel schliessenden Schaberkopf Z, der in den Fig. 3 und 4 herausgestellt ist. Das Kabel K wird durch Abschabanordnung sowie die Schneidvorrichtung S hindurchgeführt, vorzugsweise hindurchgeschoben. Nach dem Schneiden der Umhüllung und dem Abzugsvorgang wird das Kabel K in Längsrichtung bis hinter die Abschabanordnung zurückgezogen, der Schaberkopf Z aktiviert und die verbliebenen Reste der Umhüllung mittels einer axialen Bewegung des Kabels K in Längsrichtung auf den vorzugsweise ortsfest verbleibenden Schaberkopf Z - und auch auf die Schneidvorrichtung S hin - zurückgeschabt. Natürlich sind auch Ausführungsformen mit entlang des Kabels K verschiebbarem Schaberkopf Z möglich.

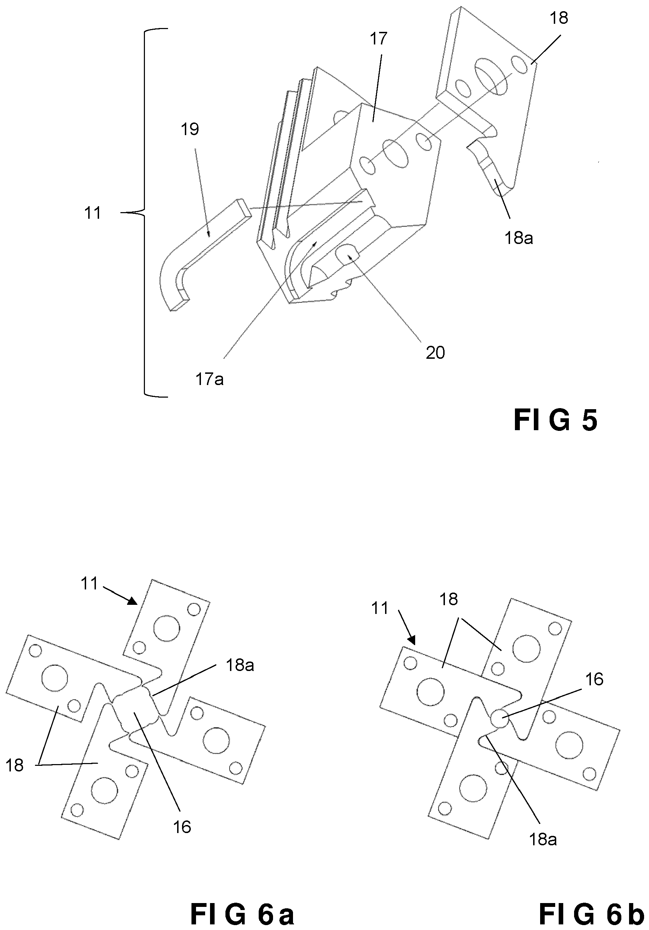

Dieser Schaberkopf Z, ist mit zumindest zwei, in der dargestellten Ausführungsform mit vier, Formbacken 11 versehen, die über einen Betätigungsmechanismus 12, 13, 14, 15 radial auf das Kabel K hin und davon weg bewegt werden können. Dazu greift ein Zapfen 15 der Formbacke 11 in eine sich über einen Teil des Umfangs eines drehbaren Ringes 13 erstreckende spiralförmige Nut 14 ein. Der Ring 13 kann über eine Druck- bzw. Zugstange 12, beispielsweise die Kolbenstange eines ansteuerbaren Fluidzylinders (nicht dargestellt) um eine Achse verdreht werden, welche mit der Achse des Kabels K zusammenfällt. In der innersten Endposition der Formbacken 11 schliessen diese das Kabel K unter Bildung einer vorzugsweise im Wesentlichen runden Durchgangsöffnung 16 (siehe Fig. 6b) im Wesentlichen dicht ein. Die Weite der Durchgangsöffnung 16 ist über den Arbeitshub der Druck- bzw. Zugstange 12 entsprechend auf den Radius des Hüllkreises der inneren, unter der Umhüllung liegenden Elemente des Kabels K einstellbar.

Jede Formbacke 11 besteht vorteilhafterweise aus einem Tragkörper 17 und einem darauf befestigten Schaber 18 oder einem vergleichbaren Bauteil, welches jedenfalls eine scharfe Kante 18a zur Ausübung einer Schabwirkung parallel zum Kabel K aufweist, ohne jedoch das Kabel K zu verletzen. Weiters ist jeder Tragkörper 17 mit zumindest einer auf zumindest eine benachbarte Formbacke 11 gerichtete Dichtung 19 versehen, die in entsprechenden nutartigen Aufnahmen 19a eingesetzt sind.

Bei vollständig auf das Kabel K hin zusammengefahrenen Formbacken 11 kann damit begrenzt durch die Schaber 18, die Tragkörper 17, die Dichtungen 19 und das zentral aufgenommene Kabel K eine das Kabel K umgebende fast luftdichte Kammer gebildet werden. Dabei dichtet vorzugsweise jede Form backe 11 gegen die nächstliegende Formbacke 11 ab. In die Kammer mündet in jedem Tragkörper 17 eine Blasöffnung 20, durch welche über eine Druckluftzufuhrleitung 21 mit Druckluft versorgt werden kann. Durch zumindest einen Druckluftstoss bei geschlossenen Formbacken 11 werden am Kabel K anliegende Reste der Umhüllung, insbesondere in den Tälern zwischen einzelnen Litzen oder Leitern eines Kabels, abgehoben und können anschliessend einfach und vollständig durch die eng anliegenden Schaber 18 erfasst und zurückgeschoben werden. Damit können alle Kabeltypen befriedigend verarbeitet werden. Die radiale Lage der Form backen 11 und/oder die Position der Schaber 18 auf den Tragkörpern 17 kann vorteilhafterweise in einem gewissen Bereich justiert werden, beispielsweise mittels einer Justierschraube.

### Liste der Bezugszeichen

- 1: Messerrad
- 2: Antrieb
- 3: Klebebandrolle
- 4: Führungs- und Andrückbacke
- 5: Klebeband
- 6: Schlitten
- 7: Aufroller
- 8: Umlenk- und Klemmmechanismus
- 8a: Pneumatikzylinder
- 9: Kontrollarm
- 11: Form backe
- 12: Druck/Zug-Stange
- 13: Ring
- 14: Spiralnut
- 15: Zapfen
- 16: zentrale Öffnung
- 17: Tragkörper
- 17a: Aufnahme für Dichtung
- 18: Schaber
- 18a: Kante
- 19: Dichtung
- 20: Blasöffnung
- 21: Druckluftleitung
- S: Schneidvorrichtung
- A: Abzugsvorrichtung für Umhüllung
- Z: Schaberkopf

## Patentansprüche

1. Vorrichtung zum Entfernen einer Umhüllung elektrischer Leiter eines vorzugsweise mehradrigen Kabels (K), vorzugsweise einer zwischen einem Schirm oder einer Isolierung und den inneren Leitern befindlichen Folie, umfassend zumindest eine Halteanordnung/Klemmvorrichtung zum Klemmen des Kabels (K) und einer vorzugsweise um die Kabellängsachse drehbaren Messeranordnung oder Schneidanordnung oder Abtrennanordnung (1) für die Umhüllung, **dadurch gekennzeichnet, dass** eine Abzugseinrichtung (A) für die zumindest teilweise eingeschnittene Umhüllung in die Vorrichtung integriert ist und diese Abzugseinrichtung (A) Abzugsmittel umfasst, die zur kraftschlüssigen Verbindung mit der Umhüllung und zur Ausübung einer Kraft auf die Umhüllung parallel zur Kabelachse ausgelegt sind, und **dass** zusätzlich eine Umhüllungs-Abschabanordnung in die Vorrichtung integriert ist, wobei die Um hüllungs-Abschabanordnung vorzugsweise in Kabelvorschubrichtung vor der Messeranordnung (1) und vorzugsweise die Abzugseinrichtung (A) in Kabelvorschubrichtung hinter der Messeranordnung (1) positioniert sind.

2. Vorrichtung nach Anspruch 1, **dadurch gekennzeichnet, dass** die Abschabanordnung einen Schaberkopf (Z) mit zumindest zwei, vorzugsweise vier, zentrisch um die inneren Leiter des Kabels (K) schliessbare Formbacken (11) aufweist, welche zusammen eine vorzugsweise runde Durchgangsöffnung (16) für die Anordnung der inneren Leiter des Kabels (K) bilden, die auf den Radius von deren Hüllkreis einstellbar ist.

3. Vorrichtung nach Anspruch 2, **dadurch gekennzeichnet, dass** jede Form backe (11) aus einem Tragkörper (17) und einem darauf befestigten Schaber (18) besteht, wobei jeder Tragkörper (17) zumindest eine auf zumindest eine benachbarte Formbacke (11) gerichtete Dichtung (19) aufweist, derart dass zwischen Schabern (18), Tragkörpern (17), und Dichtungen (19) eine zumindest fast luftdichte Kammer um das Kabel (K) gebildet ist, welche mit zumindest einer Druckluftzufuhr (21) verbunden ist.

4. Vorrichtung nach Anspruch 1, **dadurch gekennzeichnet, dass** die Abzugseinrichtung (A) zumindest eine Applikationsanordnung für jeweils zumindest ein Klebeband (5), zumindest ein Klebeband (5) als Abzugsmittel, sowie Mittel zum Abziehen des zumindest einen Klebebandes (5) mit anhaftender Umhüllung in der Längsrichtung des Kabels (K) umfasst.

5. Vorrichtung nach Anspruch 4, **dadurch gekennzeichnet, dass** die Applikationsanordnung zumindest eine automatisch radial in Bezug auf das Kabel (K) hin und vom Kabel (K) weg bewegbare sowie in Längsrichtung des Kabels (K) bewegbare Führungsbacke (4) für das Klebeband (5) umfasst.

6. Vorrichtung nach Anspruch 5, **dadurch gekennzeichnet, dass** die Führungsbacke (4) ein starrer Körper ist, vorzugsweise aus Metall, und an ihrem am Kabel (K) zur Anlage kommenden Abschnitt mit einer elastischen Schicht, vorzugsweise in Form einer Einlage, versehen ist.

7. Vorrichtung nach Anspruch 6, **dadurch gekennzeichnet, dass** die Stirnseite der Führungsbacke (4) aus einem Material mit niedrigem Reibungskoeffizienten besteht, wozu vorzugsweise das Material der Führungsbacke (4) auf die Stirnseite vorgezogen ist, gegebenenfalls mit Ausnahme eines kleinen Ausschnittes im Bereich des Kabels (K).

8. Vorrichtung nach einem der Ansprüche 4 bis 7, **dadurch gekennzeichnet, dass** die Mittel zum Abziehen des Klebebands (5) mit anhaftender Umhüllung in der Längsrichtung des Kabels (K) durch die Zuführ- oder Speichereinrichtung (3) für das Klebeband (5) gebildet sind, welche zumindest zeitweise arretierbar oder dauerhaft nur in Zufuhrrichtung freigegeben ist, sowie durch einen entlang des Kabels (K) bewegbaren Schlitten (6), auf welchem die Zuführ- oder Speichereinrichtung (3) angebracht ist.

9. Vorrichtung nach einem der Ansprüche 4 bis 8, **dadurch gekennzeichnet, dass** die Applikationsanordnung zwei Anordnungen mit Führungsbacke (4) und Zuführ- oder Speichereinrichtung für das Klebeband (5), vorzugsweise in Form von Klebebandrollen (3), auf einander gegenüberliegenden Seiten des Kabels (K) aufweist, welche Applikationsanordnungen für eine Relativbewegung in Bezug auf das Kabel (K) in Kabellängsrichtung auf einem entlang der Kabellängsachse vor und zurück verschiebbaren Schlitten (6) montiert ist.

10. Vorrichtung nach einem der Ansprüche 4 bis 9, **dadurch gekennzeichnet, dass** die Applikationsanordnung einen Sensor für Markierungen auf dem Klebeband (5) aufweist, der mit einer Auswerteeinheit für die Sensorsignale verbunden ist.

11. Verfahren zum Entfernen einer inneren Umhüllung elektrischer Leiter eines mehradrigen Kabels (K), vorzugsweise einer zwischen einem Schirm oder einer Isolierung und den inneren Leitern befindlichen Folie, umfassend das Klemmen des Kabels (K) und das Einschneiden der inneren Umhüllung, **dadurch gekennzeichnet, dass** eine kraftschlüssige Verbindung mit einem Abzugsmittel (5) hergestellt und die ein- oder abgeschnittene Umhüllung anschliessend in Längsrichtung des Kabels (K) abgezogen wird, und **dass** das Kabelende durch eine Umhüllungs-Abschabanordnung (Z) und danach durch die Messeranordnung oder Schneidanordnung oder Abtrennanordnung (1) hindurchgeschoben wird.

12. Verfahren nach Anspruch 11, **dadurch gekennzeichnet, dass** nach dem Schneiden und Abziehen der inneren Umhüllung das Kabel (K) in die Umhüllungs-Abschabanordnung (Z) zurückgezogen und nach deren Aktivierung wieder nach vorn gestossen wird.

13. Verfahren nach Anspruch 11 oder 12, **dadurch gekennzeichnet, dass** in der Umhüllungs-Abschabanordnung vor oder während des Vorstossens des Kabels (K) in einen Schaberkopf (Z) in diesem Schaberkopf (Z) ein Überdruck aufgebaut und dadurch zumindest ein Druckluftstoss auf das Kabelende hin gerichtet wird.

14. Verfahren nach Anspruch 11, **dadurch gekennzeichnet, dass** zumindest ein Klebeband (5) auf die ein- oder abgeschnittene Umhüllung angedrückt und anschliessend zusammen mit der ein- oder abgeschnittenen Umhüllung in Längsrichtung des Kabels (K) abgezogen wird.

15. Verfahren nach Anspruch 14, **dadurch gekennzeichnet, dass** zwei Klebebänder (5) von einander in Bezug auf die Kabelachse entgegengesetzte Seiten aufgebracht werden, wobei die Klebebänder (5) vor dem Andrücken vorzugsweise trichterförmig bereitgehalten und erst anschliessend mittels Führungsbacken (4) an die Umhüllung anliegend angedrückt und vorzugsweise während des Abziehens des Klebebandes (5) wieder vom Kabel (K) abgehoben werden.

16. Verfahren nach einem der Ansprüche 11 bis 15, **dadurch gekennzeichnet, dass** eine Überwachung der Art des Klebebandes (5) und/oder von dessen korrektem Abwickeln und/oder vom Erreichen des Endes des Klebebandes (5) stattfindet.
